# FASCICULE DE BREVET EUROPEEN

(11) **EP 2 483 083 B1**
(45) Date de publication et mention de la délivrance du brevet: **01.06.2016**
(21) Numéro de dépôt: 10781923.7
(22) Date de dépôt: 29.09.2010
(51) Int. Cl.: B32B 38/04, B32B 3/08, B32B 3/14, B32B 3/26, B42D 15/04

(54) **CARTE DECOREE**
VERZIERTE KARTE
DECORATED CARD

(30) Priorité: 02.10.2009 FR 0904702
(43) Date de publication de la demande: 08.08.2012
(73) Titulaire: Chanel Parfums Beauté, 92521 Neuilly sur Seine Cedex (FR)
(72) Inventeur: LEGASTELOIS, Sylvie, F-92600 Asnières sur Seine (FR)
(74) Mandataire: Potdevin, Emmanuel Eric
(86) Numéro de dépôt international: PCT/FR2010/000647
(87) Numéro de publication internationale: WO 2011/039433

(56) Documents cités:
- DE-U- 1 871 062
- US-A- 2 943 416
- US-A1- 2002 129 520

## Description

L'invention concerne une carte décorée qui peut être utilisée comme carte de correspondance, carte de voeux, support publicitaire, insert pour magazine, élément d'un mobile à suspendre ou autre encore. L'invention concerne également le procédé de fabrication d'une telle carte.

On connaît des cartes de correspondance qui sont formées à partir d'une feuille cartonnée pliée de façon à former deux volets. En aplatissant les deux volets l'un sur l'autre, une telle carte peut être insérée dans une enveloppe pour être stockée ou pour être expédiée par la poste. Et en dehors de l'enveloppe, une fois les volets ouverts, on peut poser la carte sur un support, par exemple le dessus d'un meuble ou d'un bureau.

L'attrait que présente une telle carte auprès du public est directement lié à la décoration qu'elle porte.

Ainsi, il est connu par exemple de décorer la carte avec une structure qui est insérée entre les volets et qui passe d'une configuration aplatie à une configuration déployée lorsqu'on ouvre les volets. La demande de brevet FR2646126 décrit un tel dispositif.

Egalement, on peut créer un effet décoratif en réalisant une découpe dans un des volets et en couvrant la surface de la découpe avec un panneau de matière différente, par exemple un panneau de tissu. La forme de l'ouverture peut suggérer le profil d'un objet, d'un animal ou autre. La demande de brevet EP1449678 décrit une telle carte. Le résultat obtenu avec ce mode de décoration est toutefois relativement terne. En effet l'ornement de la découpe est uniforme et présente un relief peu marqué.

Le document DE 1871062 décrit également une carte avec une découpe et un ornement.

Un but de l'invention est de proposer une carte décorée avec une découpe et un ornement amélioré qui met la forme de la découpe davantage en valeur par plus de contraste et de relief.

Un autre but de l'invention est de proposer un procédé de fabrication d'une carte décorée qui soit simple à mettre en oeuvre.

### COPIE DE CONFIRMATION

La carte décorée selon l'invention comprend au moins un volet, une découpe réalisée dans le volet et délimitée par un contour de découpe, au moins deux fils tendus au travers du contour de découpe, et une pluralité de sequins, les fils étant no sécarts et les sequins étant maintenus suspendus à chacun des fils tendus de façon à former une sorte de mosaïque et à couvrir en partie au moins la surface délimitée par le contour de découpe.

Le procédé de fabrication d'une carte décorée comprend les étapes de
- réaliser une découpe dans un premier panneau de façon à définir une surface délimitée par un contour de découpe,
- de réaliser des fentes non sécantes dans un second panneau, les fentes étant inscrites dans un contour des extrémités de fentes à l'intérieur duquel le contour de découpe est susceptible de s'inscrire, les fentes définissant entre elles des bandes successives,
- de tendre au moins deux fils selon des lignes non sécantes en travers du contour des extrémités de fentes selon une direction transversale à la direction générale des fentes et en liant le fil à chacune des bandes,
- de découper les bandes entre deux lignes successives de façon à former une pluralité de sequins individuels maintenus suspendus par les fils
- de superposer le premier et le second panneau.

L'invention sera mieux comprise en se référant à la description ci-dessus et aux dessins en annexe qui lui sont rattachés.
La figure 1 montre en vue de face une carte décorée selon un mode non limitatif de mise en oeuvre de l'invention.
La figure 2 montre une vue agrandie de la décoration de la carte de la figure 1.
La figure 3 illustre l'assemblage des sequins représentés dans les figures 1 et 2.
La figure 4 montre une variante d'assemblage des sequins.
La figure 5 illustre le montage de la carte.

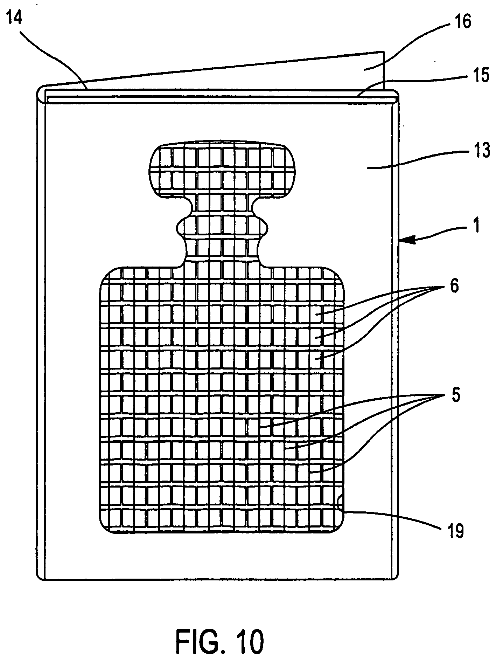

Les figures 6 à 10 illustrent les différentes étapes de fabrication de la carte de la figure 1.

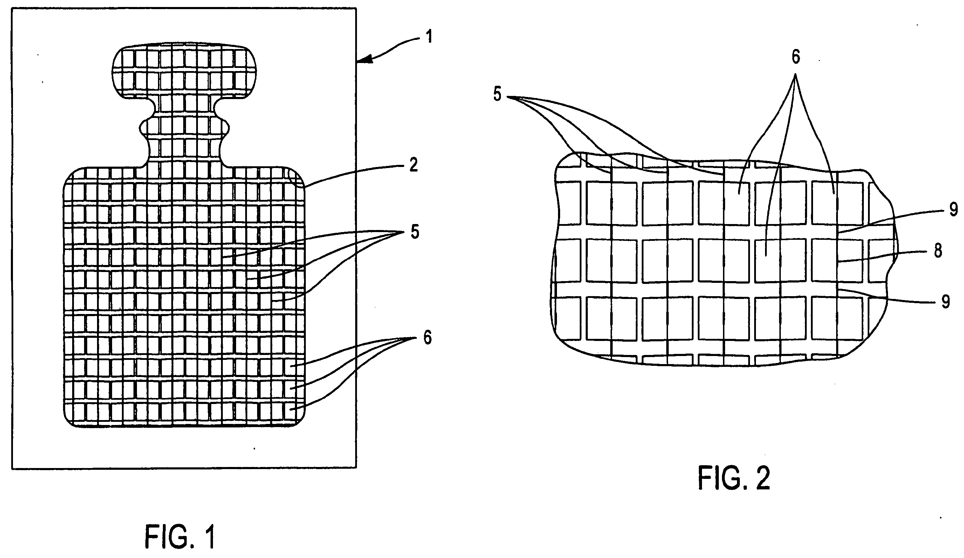

La carte décorée représentée dans la figure 1 comprend un volet 1 qui est réalisé en toute matière appropriée. Il s'agit par exemple d'une portion de feuille en papier cartonné dont le grammage est supérieur à 270 g/m². D'autres valeurs de grammage ou d'autres matières conviennent également.

Pour faciliter la compréhension de la description, on conviendra que la direction de la hauteur est orientée de bas en haut de la figure 1, et que la direction de la largeur est orientée de gauche à droite de la figure 1. On désignera par la direction de la profondeur une direction perpendiculaire au plan de la figure 1.

Ainsi les côtés du volet 1 sont orientés parallèlement aux directions de la hauteur et de la largeur. En surface, le volet est uni ou il peut présenter des motifs de couleur ou bien encore un motif en relief réalisé par gaufrage.

Le volet 1 présente dans sa partie centrale une découpe qui est délimitée par un contour de découpe 2. Le contour de découpe évoque ici la forme extérieure d'un flacon. Ceci n'est pas limitatif et toute forme appropriée convient. Notamment le contour de la découpe peut évoquer un objet, un logo, une lettre de l'alphabet, un chiffre, ou toute autre chose. Dans la figure 1, la découpe est en une seule partie. Ce n'est pas limitatif et la découpe pourrait être réalisée en plusieurs parties, par exemple pour évoquer les caractères d'une marque, d'une enseigne ou toute autre chose encore.

La découpe est définie par le contour de découpe 2, et ce contour définit lui-même une surface de découpe.

Selon l'invention la surface de découpe est traversée par une pluralité de fils 5 qui sont tendus d'un bord à l'autre du contour de découpe.

Les fils sont de tout type approprié, par exemple il s'agit de fils en fibres naturelles ou de fils synthétiques. Les fils peuvent être lui-même décorés. Par exemple il s'agit de fils dorés.

Les fils 5 s'étendent en travers de la découpe de façon non sécante. De préférence, ils sont parallèles entre eux. Dans la figure 1, les fils sont orientés dans la direction de la hauteur. Une autre orientation est cependant possible.

Chaque fil 5 porte un ou plusieurs sequins 6. Les sequins sont des pastilles de petites dimensions en comparaison des dimensions de la découpe. Ces pastilles sont découpées par exemple dans une feuille de papier ou de carton.

Avantageusement les faces de la dite feuille sont revêtues d'une décoration dont la texture et/ou la couleur tranchent avec la texture ou la couleur du volet. De plus, de façon avantageuse, les deux faces de la feuille ont des décorations différentes, en couleur ou en texture, par exemple une face brillante et une face matte.

De préférence, les sequins ont tous sensiblement la même forme et les mêmes dimensions. La forme est de préférence carrée ou rectangulaire. Ceci n'est cependant pas limitatif, et par exemple les sequins pourraient être ronds. Les dimensions des sequins, l'espacement des fils 5 et la disposition des sequins le long d'un fil sont définies de telle façon que deux sequins adjacents ne présentent aucune zone de recouvrement. Dans le cas où les fils sont non sécants et non parallèles, les sequins peuvent avoir une forme trapézoïdale.

Les fils 5 sont tendus c'est à dire qu'ils demeurent dans le plan de la découpe dans toutes les positions du volet et qu'ils sont aptes à retenir les sequins.

Les sequins sont suspendus aux fils, c'est à dire que les fils maintiennent les sequins accrochés avec deux de leurs côtés qui s'étendent parallèlement à la direction des fils. Les sequins ne peuvent pas glisser le long des fils. Toutefois ils peuvent pivoter autour des fils en fonction de leur torsion.

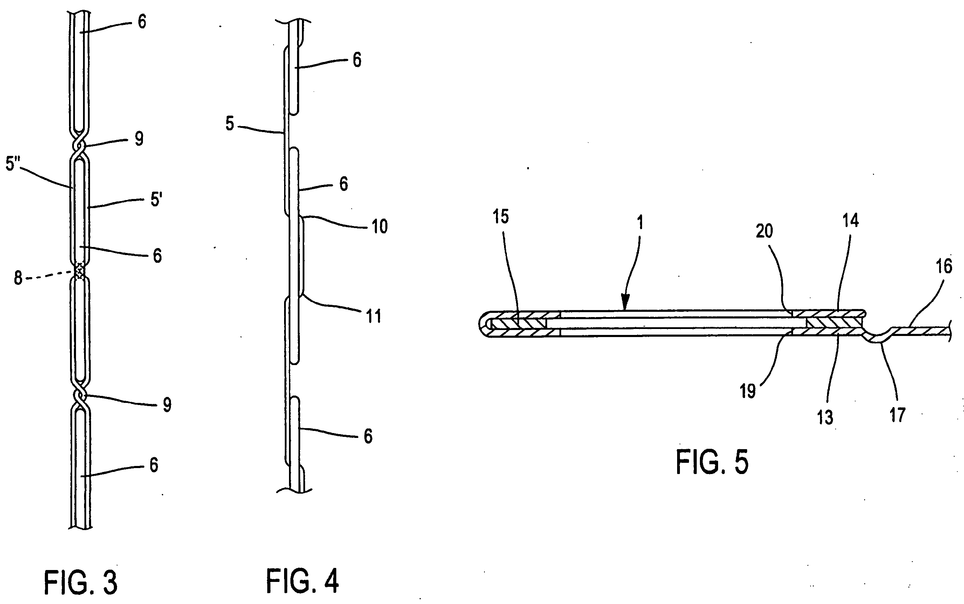

Différents modes de suspension peuvent convenir. La figure 3 illustre le mode de suspension qui est utilisé pour la carte représentée dans les figures 1 et 2. En fait le fil 5 comprend deux brins 5' et 5" qui sont parallèles entre eux et décalés dans la direction de la profondeur. Les brins 5' et 5" sont tendus le long de chacune des faces des sequins 6. Pour un sequin 6, les brins 5' et 5" s'entrecroisent au niveau d'un logement situé dans la portion médiane du sequin. Egalement les brins s'entrecroisent dans les espaces qui séparent le sequin du sequin inférieur et du sequin supérieur. Les zones de croisement sont repérées par les références 8 et 9 dans les figures 2 et 3. Typiquement les croisements des brins de fil sont réalisés à l'aide d'une machine à coudre selon la technique dite du point droit. Ainsi, chaque sequin est maintenu par trois croisements de brins de fil, un qui le traverse et deux qui l'encadrent. Dans ces conditions, les sequins ne peuvent pas glisser.

Une variante est illustrée en figure 4. Un fil 5 traverse les différents sequins deux fois dans des zones situées dans la partie médiane des sequins. Les zones de traversée sont repérées en 10 et 11 dans la figure 4. Comme précédemment, les sequins sont retenus par la tension du fil 5 et de ce fait ils ne peuvent pas glisser. Toutefois ils peuvent pivoter autour du fil en fonction de sa torsion.

D'autres modes d'accrochage des sequins sont possibles, par exemple on pourrait coller le fil à la surface des sequins.

Comme cela sera décrit plus en détails ultérieurement, selon un mode préféré de fabrication de la carte, le volet est composé de différents panneaux superposés, et les fils et les sequins se trouvent sur un panneau qui est distinct du panneau qui porte la découpe (2).

Ainsi, les sequins sont maintenus en suspension par les fils 5 en étant orientés selon la direction générale des fils 5. Initialement les sequins sont orientés à plat dans le plan de la surface de découpe. Cependant en fonction de la torsion du fil 5, l'orientation des sequins autour du fil 5 peut varier jusqu'à environ un demi-tour.

Lorsqu'ils sont à plat, les sequins couvrent en surface plus de 50% de la surface de la découpe 2, et de préférence au moins 70%, ou mieux au moins 80% de cette surface.

Au final les sequins forment une sorte de mosaïque qui couvre la surface de la découpe 2. Du fait que les sequins forment une structure bien distincte du reste du volet 1, ils mettent en évidence la forme de la découpe. Le découpage des sequins, leur aspect et l'orientation qu'ils prennent autour du fil 5 donnent un effet de relief naturel et de contraste qui tranche avec le reste du volet. Et d'une carte à l'autre, l'orientation des sequins n'est pas répétitive.

La figure 5 et les figures suivantes illustrent un mode de fabrication d'une carte décorée comme celle qui vient d'être décrite.

Selon ce qui est représenté dans la figure, le volet 1 est composé de trois panneaux superposés, un panneau frontal 13, un panneau dorsal 14 et un panneau intermédiaire 15 qui est pris en sandwich entre les deux panneaux précédents.

Avantageusement, le panneau frontal et le panneau dorsal sont réalisés à partir d'une même bande de matière, et ils sont repliés l'un sur l'autre. De plus, au niveau de la bande, la zone qui forme le panneau frontal 13 est prolongée à l'opposé du panneau dorsal pour former un second volet 16 qui est relié au premier volet 1 par un rainage 17. Ce second volet 16 présente les mêmes dimensions que le volet 1 et il est prévu pour former un diptyque avec lui.

Egalement, le second volet forme un arrière plan qui est visible au travers des espaces qui séparent les sequins. Il peut être revêtu d'une décoration particulière pour accentuer encore la mise en évidence de la découpe, par exemple il peut être coloré avec une couleur unie, ou bien revêtu d'un film, par exemple un film doré. Ce second volet est cependant facultatif. Ou bien il pourrait être rapporté par collage.

Les deux panneaux 13 et 14 présente chacun une découpe délimitée par un contour de découpe 19, 20. La forme des découpes est identique, et les découpes sont placées sur les panneaux de façon à se superposer lors du montage du volet 1.

En parallèle, le panneau intermédiaire 15 est préparé. Il est réalisé par exemple en papier cartonné de même grammage que le papier des volets 13 ou 14, et il présente des dimensions sensiblement égales aux dimensions des volets 13 et 14.

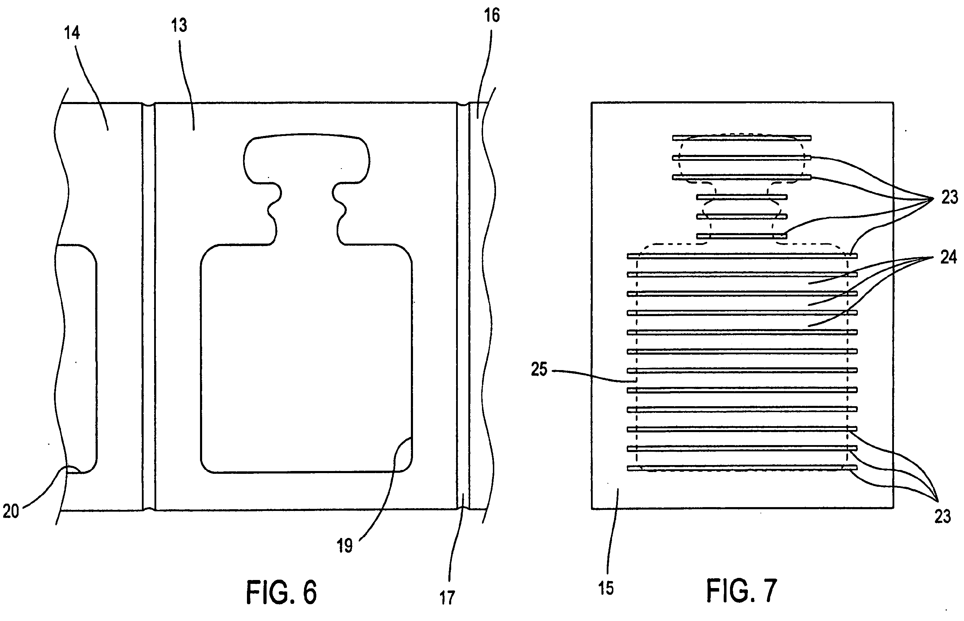

Le panneau 15 est percé par une multitude de fentes 23 qui s'étendent de façon parallèle ou en variante de façon non sécante. Dans le mode de réalisation illustré en figure 7, les fentes s'étendent dans la direction de la largeur. Les fentes 23 délimitent entre elles des bandes 24. Par exemple, les fentes sont espacées de 5 millimètres, elles ont elles-mêmes une largeur de 1 millimètre, et ainsi définissent entre elles des bandes de 4 millimètres de largeur. Naturellement ces valeurs sont seulement indicatives. La longueur des fentes et leur nombre sont déterminés pour que la zone couverte par les fentes couvre entièrement le contour des découpes 19 ou 20 des volets 13 et 14. En d'autres termes, les extrémités des fentes forment une courbe fermée à l'intérieur de laquelle les contours 19 et 20 peuvent s'inscrire. Pour illustrer cela, en figure 7 on a représenté par le trait mixte 25 l'image des contours 19 et 20 projetées sur le panneau 15. Cette image s'inscrit entièrement dans le contour des extrémités de fentes.

Les fentes sont réalisées dans le panneau 15 par tour moyen approprié, et par exemple par une opération de poinçonnage.

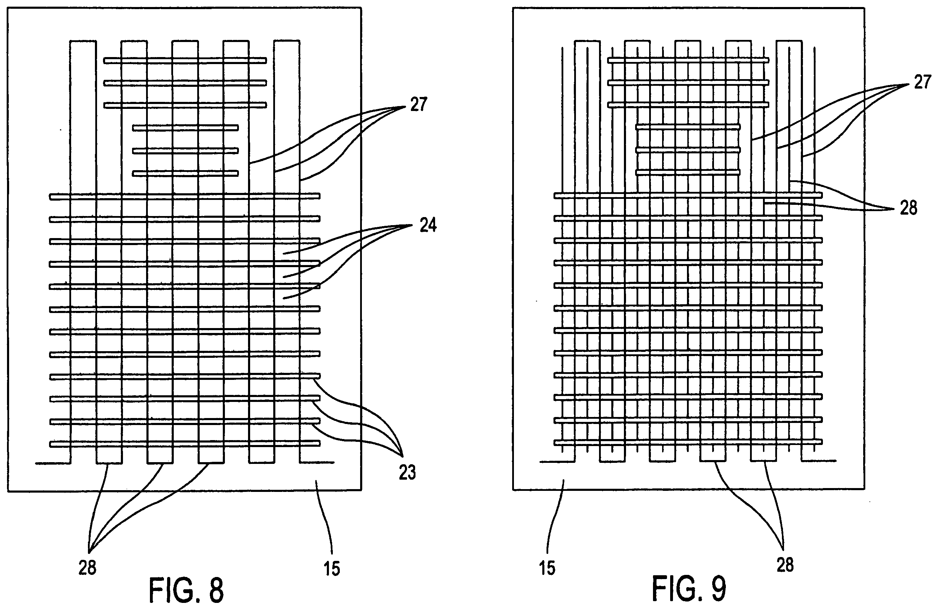

L'étape suivante est illustrée en figure 8. Elle consiste à tendre les fils d'un bord à l'autre du contour des extrémités de fentes, en travers des bandes et des fentes, et à piquer chacune des bandes au passage. Selon le mode de réalisation illustré, à l'aide d'une machine à coudre on pique le panneau 15 selon des lignes parallèles 27 qui sont réunies entre elles de façon à former une succession de créneaux 28. Les lignes 27 sont orientées transversalement à la direction des fentes de façon à traverser successivement les fentes et les bandes. Dans la figure 8, les lignes sont orientées dans la direction de la hauteur. De façon classique la machine pique le panneau avec deux brins de fil pour former des points droits. Les brins de fil s'étendent le long de chacune des faces et s'entrecroisent aux points de piquage. Le pas de piquage de la machine est défini de telle façon qu'un point de piquage soit situé dans chacune des fentes 23 et vers le milieu de chaque bande 24, c'est à dire que le pas est la moitié de la distance d'écartement des fentes.

De préférence les créneaux 28 sont identiques, ainsi les lignes 27 sont à égale distance les unes des autres et elles ont la même longueur. En conséquence, dans certaines zones périphériques, les lignes s'écartent du contour des extrémités de fentes.

Dans l'étape suivante qui est illustrée en figure 9, les bandes sont découpées entre les lignes 27, par exemple à l'aide d'une lame de coupe. Les lignes de découpe 28 s'étendent parallèlement aux lignes de fil à l'intérieur de chacun des créneaux 28.

Les bandes 24 ainsi découpées dans la direction de la hauteur forment les sequins 6, et les lignes 27 forment les fils 5 de suspension des sequins.

Dans une étape suivante de montage de la carte, le panneau 15 est inséré entre les panneaux 13 et 14, et l'ensemble est assemblé par exemple à l'aide d'une colle ou de tout autre moyen approprié. Les sequins 6 apparaissent dans le contour de la découpe 19 du volet frontal 13, et ils laissent voir le panneau 16 au travers de la découpe du panneau 14. Sous l'effet de la torsion des fils de suspension 5 les sequins s'orientent de façon variable autour de la position à plat où ils sont placés dans le plan du panneau 15. Lorsque la carte est repliée, l'amplitude de rotation des sequins est limitée dans l'épaisseur du volet 1. Lorsque la carte est déployée, l'amplitude de rotation peut être plus importante.

Une partie des sequins, ceux qui se trouvent à l'extérieur de l'image de contour 25, ainsi que les portions de fil auxquels ils sont suspendus sont masqués. En effet ils sont emprisonnés entre les parties pleines des deux panneaux 13 et 14.

Naturellement la présente description n'est donnée qu'à titre indicatif, et l'on pourrait adopter d'autres mises en oeuvre de l'invention sans pour autant sortir du cadre de celle-ci.

Notamment, le nombre de fils n'est pas limitatif, il faut au moins deux fils.

Egalement le second volet 16 est facultatif. De même l'un des deux panneaux 13 ou 14, en particulier le panneau dorsal 14 est facultatif.

Si les deux panneaux sont présents, la découpe d'un des panneaux frontal 13 ou dorsal 14 est facultative, ou bien cette découpe pourrait avoir une forme différente de celle de l'autre panneau. Par exemple l'un des contours pourrait être une réduction de l'autre contour par homothétie. Dans ce cas le contour des extrémités de fentes est déterminé de façon que le contour des deux découpes s'inscrive dans le contour des extrémités de fentes afin que le contour de la plus grande découpe s'inscrive dans le contour des extrémités de fentes.

Le contour de découpe n'est pas nécessairement une courbe fermée, on pourrait avoir un contour de découpe qui est ouvert sur l'extérieur, en particulier un contour qui débouche sur un côté parallèle à la direction des fils.

En outre la découpe peut être réalisée en plusieurs parties pour former par exemple un ensemble d'objets ou un ensemble de lettres.

Lors du découpage des bandes pour réaliser les sequins on pourrait réaliser deux lignes de découpe rapprochées l'une de l'autre entre deux fils adjacents, de façon à créer un espace libre entre les sequins dans la direction de la largeur.

Les sequins pourraient aussi avoir une autre forme que la forme rectangulaire qui a été décrite.

## Revendications

1. Carte décorée comprenant au moins un volet (1), une découpe réalisée dans le volet et délimitée par un contour de découpe (2) et au moins deux fils (5) tendus au travers du contour de découpe,
**caractérisée par le fait que** les fils sont non sécants et qu'elle présente une pluralité de sequins (6), les sequins étant maintenus suspendus à chacun des fils (5) de façon à former une sorte de mosaïque et à couvrir en partie au moins la surface délimitée par le contour de découpe (2).

2. Carte selon la revendication 1, **caractérisée par le fait que** les fils (5) sont parallèles entre eux.

3. Carte selon l'une quelconque des revendications précédentes, **caractérisé par le fait que** les sequins (5) sont séparés par des fentes (23) qui s'étendent transversalement à la direction des fils (5).

4. Carte selon la revendication 3, **caractérisée par le fait que** les fentes (23) sont réalisées dans un panneau (15) distinct du panneau (13) qui porte la découpe, que les fentes (23) ont des extrémités qui définissent un contour d'extrémités de fentes, et que le contour de découpe (19) s'inscrit entièrement dans le contour des extrémités de fentes.

5. Carte selon l'une quelconque des revendications précédentes, **caractérisée par le fait que** les sequins (6) ont la même forme et les mêmes dimensions.

6. Carte selon l'une quelconque des revendications précédentes, **caractérisée par le fait que** les sequins (6) couvrent en surface au moins 70% ou mieux au moins 80% de la surface du contour de découpe (2).

7. Carte selon l'une quelconque des revendications précédentes, **caractérisée par le fait que** les fils (5) comprennent deux brins de fil (5', 5") tendus le long de chaque face d'un sequin (6), que les brins de fil (5', 5") s'entrecroisent dans un logement situé dans la portion médiane d'un sequin (6) et dans les espaces qui séparent le dit sequin (6) des sequins supérieur et inférieur.

8. Carte selon l'une quelconque des revendications 1 à 6, **caractérisé par le fait qu'**un fil (5) traverse deux fois chaque sequin (6) dans sa partie médiane.

9. Procédé de fabrication d'une carte décorée comprenant les étapes de
- réaliser une découpe dans un premier panneau (13, 14) de façon à définir un espace délimité par un contour de découpe (19, 20),
- de réaliser des fentes (23) non sécantes dans un second panneau (15), les fentes étant inscrites dans un contour des extrémités de fentes à l'intérieur duquel le contour de découpe est susceptible de s'inscrire, les fentes définissant entre elles des bandes successives (24),
- de tendre au moins deux fils (5) selon des lignes (27) non sécantes en travers du contour des extrémités de fentes (23) selon une direction transversale à la direction générale des fentes et en liant le fil à chacune des bandes (24),
- de découper les bandes (24) entre deux lignes successives de façon à former une pluralité de sequins (6) individuels maintenus suspendus par les fils (5).
- de superposer le premier et le second panneau (13, 14, 15).

## Patentansprüche

1. Verzierte Karte, umfassend mindestens eine Klappe (1), einen Ausschnitt, der in der Klappe realisiert ist und durch eine Ausschnittkontur (2) begrenzt ist, und mindestens zwei Fäden (5), die durch die Ausschnittkontur hindurch gespannt sind,
**dadurch gekennzeichnet, dass** die Fäden nicht schneidend sind und dass sie eine Vielzahl von Pailletten (6) aufweist, wobei die Pailletten an jedem der Fäden (5) aufgehängt gehalten werden, um eine Art Mosaik zu bilden und um teilweise zumindest die durch die Ausschnittkontur (2) begrenzte Oberfläche zu bedecken.

2. Karte nach Anspruch 1, **dadurch gekennzeichnet, dass** die Fäden (5) zueinander parallel sind.

3. Karte nach einem der vorhergehenden Ansprüche, **dadurch gekennzeichnet, dass** die Pailletten (5) durch Schlitze (23) getrennt sind, die quer zu der Richtung der Fäden (5) verlaufen.

4. Karte nach Anspruch 3, **dadurch gekennzeichnet, dass** die Schlitze (23) in einer Platte (15) realisiert sind, die von der Platte (13), welche den Ausschnitt trägt, verschieden ist, dass die Schlitze (23) Enden haben, die eine Schlitzendenkontur bilden, und dass die Ausschnittkontur (19) sich vollständig in die Kontur der Schlitzenden einfügt.

5. Karte nach einem der vorhergehenden Ansprüche, **dadurch gekennzeichnet, dass** die Pailletten (6) die gleiche Form und die gleichen Abmessungen haben.

6. Karte nach einem der vorhergehenden Ansprüche, **dadurch gekennzeichnet, dass** die Pailletten (6) an der Oberfläche mindestens 70 % oder besser mindestens 80 % der Oberfläche der Ausschnittkontur (2) bedecken.

7. Karte nach einem der vorhergehenden Ansprüche, **dadurch gekennzeichnet, dass** die Fäden (5) zwei Fadenstücke (5', 5") umfassen, die entlang jeder Fläche einer Paillette (6) gespannt sind, dass die Fadenstücke (5', 5") sich in einer Aufnahme kreuzen, die im Mittelteil einer Paillette (6) und in den Räumen liegt, welche die Paillette (6) von der oberen und unteren Paillette trennen.

8. Karte nach einem der Ansprüche 1 bis 6, **dadurch gekennzeichnet, dass** ein Faden (5) jede Paillette (6) in ihrem Mittelteil zweimal durchquert.

9. Verfahren zur Herstellung einer verzierten Karte, welches die folgenden Schritte umfasst:
- Realisieren eines Ausschnitts in eine ersten Platte (13, 14), um einen Raum zu definieren, der durch eine Ausschnittkontur (19, 20) begrenzt wird,
- Realisieren von nicht schneidenden Schlitzen (23) in einer zweiten Platte (15), wobei sich die Schlitze in einer Kontur der Schlitzenden einfügen, in deren Inneren sich die Ausschnittkontur einfügen kann, wobei die Schlitze zwischen sich aufeinanderfolgende Streifen (24) definieren,
- Spannen von mindestens zwei Fäden (5) entlang der nicht schneidenden Linien (27) durch die Kontur der Schlitzenden (23) hindurch in einer Richtung, die zu der allgemeinen Richtung der Schlitze quergerichtet ist, und indem der Faden mit jedem Streifen (24) verbunden wird,
- Zerschneiden der Streifen (24) zwischen zwei aufeinanderfolgenden Linien, um eine Vielzahl von einzelnen Pailletten (6) zu bilden, die durch die Fäden (5) aufgehängt gehalten werden.
- Übereinanderlegen der ersten und der zweiten Platte (13, 14, 15).

## Claims

1. A decorated card comprising at least one leaf (1), a cutout formed in the leaf and defined by a cutout outline (2) and at least two threads (5) extending under tension across the cutout outline,
**characterized in that** the threads are non-intersecting and the card comprises a plurality of spangles (6), the spangles being held suspended from each of the threads (5) under tension so as to form a sort of mosaic and cover at least part of the area defined by the cutout outline (2).

2. A card according to claim 1, **characterized by** the fact that the threads (5) are mutually parallel.

3. A card according to any preceding claim, **characterized by** the fact that the spangles (5) are separated by slots (23) that extend transversely to the direction of the threads (5).

4. A card according to claim 3, **characterized by** the facts that the slots (23) are formed in a panel (15) distinct from the panel (13) carrying the cutout, that the slots (23) have ends defining a slot end outline, and that the cutout outline (19) is inscribed fully within the outline of the slot ends.

5. A card according to any preceding claim, **characterized by** the fact that the spangles (6) are of the same shape and of the same dimensions.

6. A card according to any preceding claim, **characterized by** the fact that the spangles (6) cover at least 70% of the area of the cutout outline (2), or better still, at least 80% of said area.

7. A card according to any preceding claim, **characterized by** the facts that each of the threads (5) comprises two strands of thread (5', 5") under tension along respective faces of a spangle (6), that the strands of thread (5', 5") cross over in a hole situated in the middle portion of a spangle (6) and in the gaps that separate said spangle (6) from the spangles above it and below it.

8. A card according to any one of claims 1 to 6, **characterized by** the fact that a thread (5) passes twice through each spangle (6) in its middle portion.

9. A method of manufacturing a decorated card, the method comprising the following steps:
• forming a cutout in a first panel (13, 14) in such a manner as to define a space defined by a cutout outline (19, 20);
• forming non-intersecting slots (23) in a second panel (15), the slots being inscribed within an outline of the slot ends, within which outline the cutout outline can be inscribed, the slots defining successive strips (24) between them;
• mounting at least two threads (5) under tension along non-intersecting lines (27) across the outline of the slot ends (23) in a direction transverse to the general direction of the slots, and while fastening the thread to each of the strips (24);
• splitting the strips (24) between two successive lines in such a manner as to form a plurality of individual spangles (6) held suspended by the threads (5) ; and
• superposing the first and the second panels (13, 14, 15).
